# EUROPÄISCHE PATENTANMELDUNG

(11) **EP 0 999 388 A1**
(43) Veröffentlichungstag der Anmeldung: **10.05.2000**
(21) Anmeldenummer: 98120959.6
(22) Anmeldetag: 05.11.1998
(51) Int. Cl.: F16J 15/32

(54) **PTFE Manschetten-Wellendichtung**

(71) Anmelder: Ford Global Technologies, Inc., A subsidiary of Ford Motor Company, Dearborn, Michigan 48126 (US)
(72) Erfinder: Kuhlen, Morten, 41199 Mönchengladbach (DE); Mayer, Guido, 50734 Erftstadt (DE)
(74) Vertreter: Drömer, Hans-Carsten, Dipl.-Ing.

(57) **Zusammenfassung**

Bei einem PTFE Manschetten-Wellendichtring mit einer tragenden Blechhülse (2), die von einem Mantel (3) aus Elastomermaterial umfaßt ist und die eine äußere Staublippe (5) bildet und an dem eine aus PTFE-materialbestehende Manschettenlippe (9) mit wellenförmigem Querschnitt angeordnet ist, die an ihrem Innenumfang eine schraubenförmige Dichtkante (10) aufweist, die eine entsprechende schraubenförmige Rückfördernut (11) bildet, ist zumindest in einem Teilabschnitt, der durch die schraubenförmige Dichtkante (10) gebildeten schraubenförmigen Rückfördernut (11) eine Überströmöffnung (15) zum Außenumfang der Manschettenlippe (9) vorgesehen.

## Beschreibung

Die Erfindung bezieht sich auf einen PTFE Manschetten-Wellendichtring, der im Oberbegriff des Patentanspruches 1 erläuterten Art.

Aus dem SAE-Papier 880 300 ist ein solcher PTFE Manschetten-Weltendichtring bekannt und auf der Seite 54 ist dessen Funktionsweise sowie dessen Problematik im einzelnen beschrieben.

Das Problem eines solchen PTFE Manschetten-Wellendichtringes besteht darin, daß, wird er z.B. an Kurbelwellen von Brennkraftmaschinen eingesetzt, das in den Schraubengängen der schraubenförmigen Dichtkante in der Rückfördernut eingeschlossene Schmiermittel zu lange in dieser Nut festgehalten wird und hier durch die auftretende innere Reibung im Öl zum Verkoken neigt, wodurch Ablagerungen in der Rückfördernut und an der Welle auftreten, die die einwandfreie Funktion des PTFE Manschetten-Wellendichtringes beeinträchtigen.

Die Aufgabe der Erfindung ist es, einen PTFE Manschetten-Wellendichtring der im Oberbegriff des Patentanspruches 1 erläuterten Art derart zu verbessern, daß das auftretende Problem der Verkokung des Schmiermittels, das zur Bildung von Ablagerungen führt, die in der Rückfördernut anhaften und diese zunehmend ausfüllen, verringert wird.

Dadurch, daß zumindest in einem Teilabschnitt der durch die schraubenförmige Dichtkante gebildeten Rückfördernut eine Überströmöffnung zum Außenumfang der Manschettenlippe vorgesehen ist, wird das Schmiermittel nicht an der letzten ringförmigen Dichtkante dauernd festgehalten, sondern kann über die vorgesehene Überströmöffnung zum Außenumfang der Manschettenlippe gelangen, so daß ein Austausch des Schmiermittels erfolgt, wodurch die Neigung zum Verkoken und zur Bildung von Ablagerungen verringert wird.

Gemäß der Erfindung wird diese Aufgabe gelöst, indem ein PTFE Manschetten-Wellendichtring der im Oberbegriff des Patentanspruches 1 erläuterten Art die im Kennzeichenteil des Patentanspruches 1 aufgezeigten Merkmale aufweist.

In den Ansprüchen 2 - 7 sind weitere zweckmäßige Ausführungsformen der erfindungsgemäßen Überströmöffnung aufgezeigt.

Die Erfindung wird anhand eines Ausführungsbeispieles der Erfindung näher erläutert. Es zeigt:
- Fig. 1: einen vertikalen Teilschnitt durch einen PTFE Manschetten-Wellendichtring von an sich herkömmlicher Bauart;
- Fig. 2: einen vergrößerten Teilschnitt durch einen Teil der Manschettenlippe mit der erfindungsgemäßen Überströmöffnung;
- Fig. 3: einen vergrößerten Teilschnitt durch einen Teil der Manschettenlippe mit einer anderen Ausführungsform der Überströmöffnung;
- Fig. 4: einen vergrößerten Teilschnitt durch einen Teil der Manschettenlippe mit einer weiteren Ausführungsform der Überströmöffnung;
- Fig. 5: einen vergrößerten Teilschnitt durch einen Teil der Manschettenlippe mit einer weiteren Ausführungsform der Überströmöffnung und
- Fig. 6: einen vergrößerten Teilschnitt durch einen Teil der Manschettenlippe mit einer weiteren speziellen Ausführungsform des letzten Gewindeganges und einer besonders gestalteten Überströmöffnung.

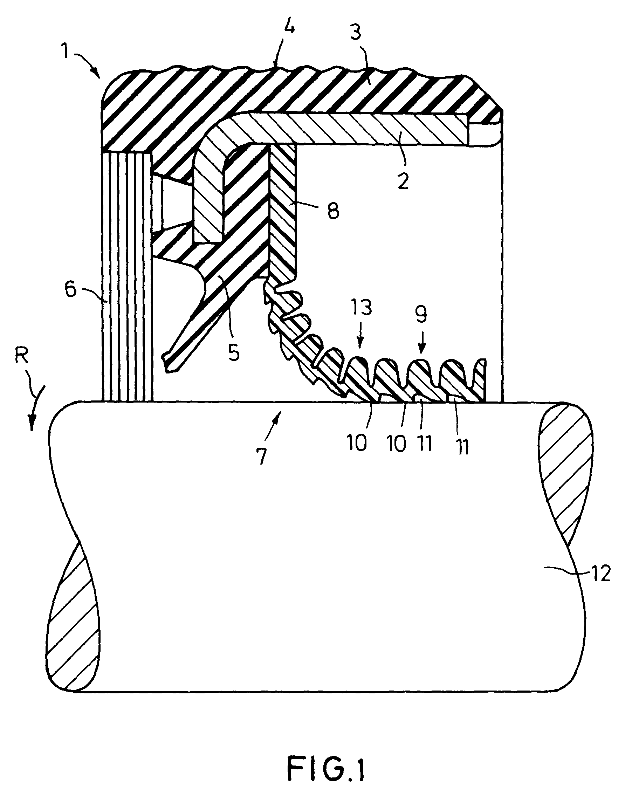

Der in Fig. 1 im Teilschnitt prinzipiell gezeigte PTFE Manschetten-Wellendichtring 1 besteht im wesentlichen aus einer tragenden Blechhülse 2, die von einem Mantel 3 aus Elastomermaterial umgeben ist, über dessen Außenumfang 4 der PTFE Manschetten-Wellendichtring 1 in die entsprechende Aufnahmebohrung eines Maschinengehäuses eingesetzt werden kann.

Das Elastomermaterial des Mantels 3 kann hierbei gleichzeitig eine nach außen weisende Staublippe 5 bilden, vor der nach außen hin noch eine Vließscheibe 6 zum zusätzlichen Verhindern von Staub- und Schmutzeintritt vorgesehen sein kann.

Eine PTFE Manschette 7 ist mit einem radialen Basisteil 8 an dem Elastomermaterial der Staublippe 5 befestigt und erstreckt sich in eine bogen-hülsenförmige Manschettenlippe 9 mit einem Querschnitt, der wellenförmig ausgeformt sein kann und weist an ihrem Innenumfang eine sich schraubenförmig erstreckende Dichtkante 10 auf, zwischen deren einzelnen Schraubengängen Bereiche einer Rückfördernut 11 gebildet werden.

Der PTFE Manschetten-Wellendichtring 1 wirkt mit einer Welle 12 zusammen, deren Drehrichtung durch den Pfeil R angegeben ist. Die Lage der Teile des PTFE Manschetten-Wellendichtringes sind hierbei vollen Linien eingezeichnet, die diese Teile 10 in ihrer Abdichtungsfunktion einnehmen.

Das in Fig. 1 gezeigte Vlies 6 liegt zum Außenbereich (luftseitig), wohingegen die in Fig. 1 nach rechts zeigende Manschettenlippe 9 zum Innenbereich (ölseitig) des Maschinengehäuses liegt, in dem das Schmiermittel vorhanden ist, das gegen ein Austreten entlang der Welle 12, die nach außen geführt ist, verhindert werden muß.

Wie insbesondere aus dem zum Stand der Technik genannten SAE-Papier 880 300 Seite 54, ersichtlich wird, bewirkt die schraubenförmige Dichtkante 10 mit ihren mehreren Schraubengängen ein dauerndes Rückfördern des Schmiermittels entlang der Rückfördernut 11, so daß praktisch an dem letzten wirksamen Schraubengang der Dichtkante 10 das Schmiermittel an einem Austritt nach außen gehindert wird.

Damit ist zwar die Abdichtung gewährleistet, das im Schraubengang der Rückfördernut 11 eingeschlossene Schmiermittel wird dort jedoch nicht erneuert und führt durch Einwirkung von Hitze hervorgerufen durch Reibung zu Alterung und damit zu einem Verkoken, wodurch entstehende Ablagerungen sich in der Rückfördernut und auf der Welle 12 ablagern können. Diese Ablagerungen, die in unregelmäßiger Form entstehen, führen zu einer Beeinträchtigung der ordnungsgemäßen Dichtwirkung der schraubenförmigen Dichtkante 10.

Gemäß der Erfindung wird daher vorgeschlagen, in zumindest einem Teilabschnitt der durch die schraubenförmige Dichtkante 10 gebildeten Rückfördernut 11 eine Überströmöffnung 13 zum Außenumfang der Manschettenlippe 9 vorzusehen oder im ersten (oder zweiten) ölseitigen Gewindegang eine Art gegenläufiges Gewinde eingestochen oder geprägt wird, wodurch für eine Erneuerung des Schmiermittels gesorgt und damit zu einer Verringerung des Alterung- und Verkokungsproblemes beigetragen werden kann.

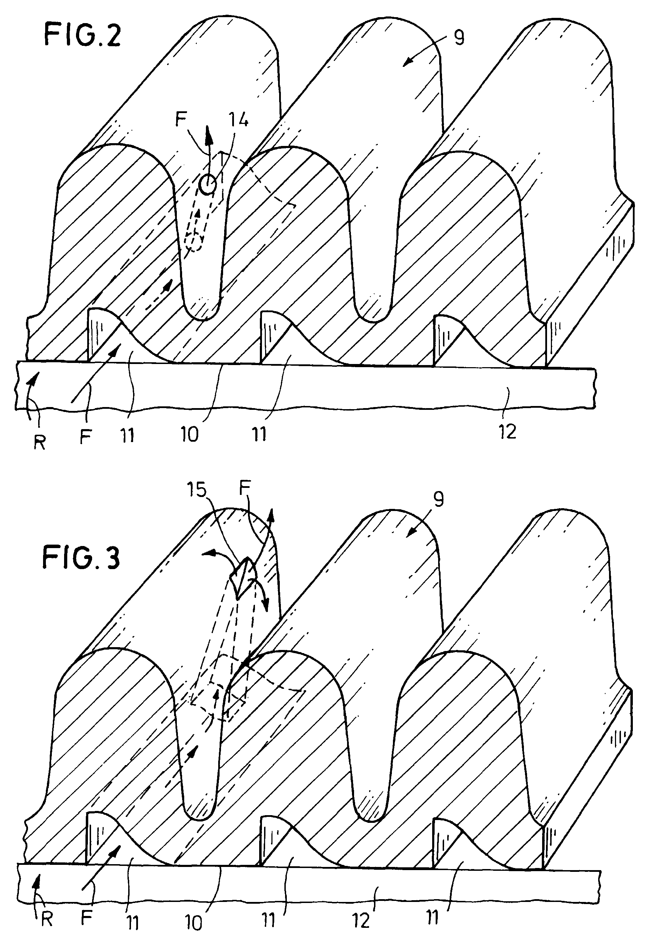

In Fig. 2 ist diese Überströmöffnung 13 als eine Bohrung 14 in einer Flanke des wellenförmigen Außenumfanges der Manschettenlippe 9 ausgeführt.

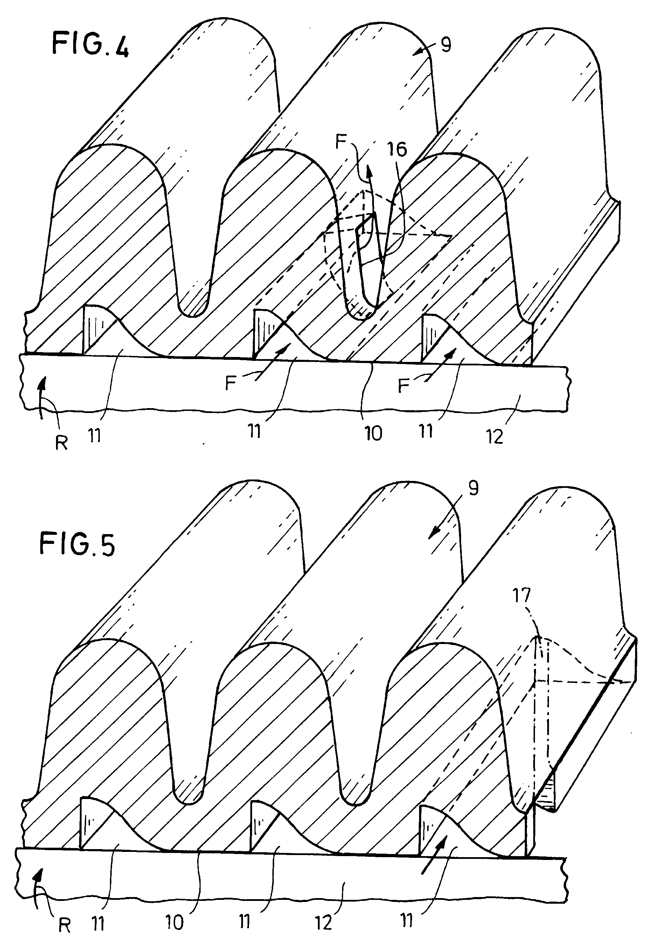

In Fig. 3 ist die Überströmöffnung in Form eines in einen Wellenberg der Manschettenlippe 9 eingebrachten radialen Stanzschnittes 15 ausgebildet, dessen Neigung schräg zur Förderrichtung des Schmiermittels gerichtet ist und dementsprechend das Schmiermittel angedeutet durch die Pfeile F nach außen ablenkt.

In Fig. 4 ist die erfindungsgemäße Überströmöffnung in Form eines Stanzschnittes 16 in einer Wellental der wellenförmigen Manschettenlippe 9 ausgebildet, der gleichfalls schräg zur Förderrichtung des Schmiermittels ausgerichtet sein kann und der gegenüber dem Stanzschnitt in Fig. 3 den Vorteil aufweist, daß hier die Stufe, die durch das Schmiermittel zu überwinden ist, möglichst niedrig liegt, wodurch es zu einer Verbesserung der Zirkulation kommt.

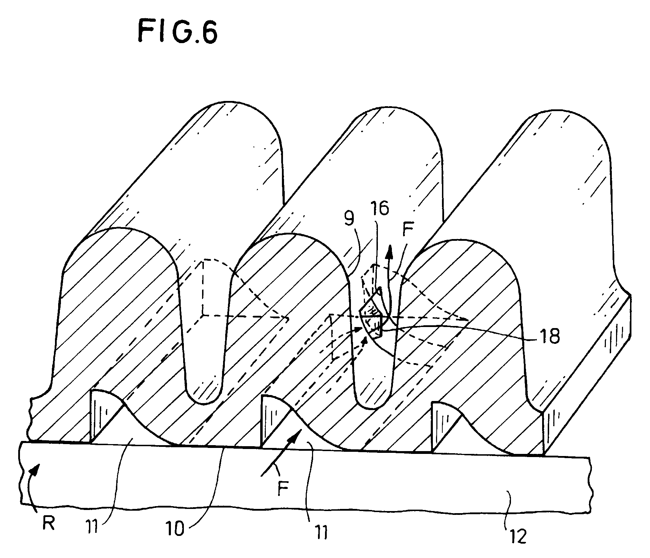

In Fig. 5 ist die erfindungsgemäße Überströmöffnung in Form eines gegenläufigen Schraubenganges 17 vorgesehen, der durch seine Gegenläufigkeit die Dichtkante 10 anschneidet bzw. unterbricht und so zu einem Vermischen des Schmiermittels in dem letzten wirksamen Schraubengang mit dem Schmiermittel in dem davorliegenden Schraubengang sorgt bzw. durch die Beschleunigung des Ölstroms das Öl aus dem luftseitigen Gewindegängen in den Ölraum hineinzieht.

Fig. 6 zeigt eine besondere Ausführung der Rückfördernut, Im Bereich der Dichtkante ist eine Keilkante 18 angebracht, die den Ölstrom in Richtung einer gestanzten Ablauföffnung offen zur Ölseite beschleunigt.

## Patentansprüche

1. PTFE Manschetten-Wellendichtring (1) mit einer tragenden Blechhülse (2), die von einem Mantel (3) aus Elastomermaterial umfaßt ist und eine äußere Staubtippe (5) bildet und an dem eine aus PTFE Material bestehende Manschettenlippe (9) mit wellenförmigem Querschnitt angeordnet ist, die an ihrem zu einer Welle (12) liegenden Innenumfang mit einer schraubenförmigen Dichtkante (10) versehen ist, die eine entsprechende schraubenförmige Rückfördernut (11) bildet,
**dadurch gekennzeichnet,** daß
- zumindest in einem Teilabschnitt der durch die schraubenförmige Dichtkante (10) gebildeten schraubenförmigen Rückfördernut (11) eine Uberströmöffnung zur Ölseite der Manschettenlippe (9) vorgesehen ist.

2. PTFE Manschetten-Wellendichtring nach Anspruch 1,
**dadurch gekennzeichnet,** daß
- die Überströmöffnung durch eine Bohrung (14) in einer Flanke der wellenförmigen Manschettenlippe (9) gebildet ist.

3. PTFE Manschetten-Wellendichtring nach Anspruch 1,
**dadurch gekennzeichnet** daß
- die Überströmöffnung durch einen schrägen Stanzschnitt (15) in einem Wellenberg der Manschettenlippe (9) gebildet ist, der schräg zur Förderrichtung der Rückfördernut (11) geneigt ist.

4. PTFE Manschetten-Wellendichtring nach Anspruch 1,
**dadurch gekennzeichnet,** daß
- die Überströmöffnung durch einen Stanzschnitt (16) im Wellental der Manschettenlippe (9) gebildet ist, wodurch infolge der geringeren Differenzhöhe ein Kreislauf bei geringem Druckaufbau ermöglicht wird.

5. PTFE Manschetten-Wellendichtring nach Anspruch 1,
**dadurch gekennzeichnet**, daß
- die Überströmöffnung durch einen die Dichtkante (10) unterbrechenden gegenläufigen Schraubengang (17) gebildet ist, wodurch ein Austausch des Schmiermittels aus dem letzten wirksamen Schraubengang der Rücktördernut (11) mit dem aus dem vorhergehenden Bereich der Rückfördernut (11) ermöglicht wird.

6. PTFE Manschetten-Wellendichtring nach Anspruch 4,
**dadurch gekennzeichnet** daß
- die Manschettenlippe (9) im Bereich unmittelbar nachfolgend dem Stanzschnitt (16) in der Rückfördernut (11) mit einer vorspringenden Keilkante (18) versehen ist.

7. PTFE Manschetten-Wellendichtring nach den Ansprüchen 1 bis 6,
**dadurch gekennzeichnet** daß
- die Überströmöffnung bzw. Überströmmöglichkeit in mehreren axial aufeinanderfolgenden Abschnitten der Manschettenlippe (9) angeordnet sind.
